# EUROPÄISCHE PATENTANMELDUNG

(11) **EP 0 538 816 A1**
(43) Veröffentlichungstag der Anmeldung: **28.04.1993**
(21) Anmeldenummer: 92117991.7
(22) Anmeldetag: 21.10.1992
(51) Int. Cl.: B61D 3/18, B61D 39/00

(54) **Wettergeschützter flexibler Übergang zwischen zwei Güterwageneinheiten mit höhenverstellbaren Dächern**

(30) Priorität: 21.10.1991 DE 4134699
(71) Anmelder: ARS-ALTMANN RAIL SYSTEM GmbH, D-02906 Niesky (DE)
(72) Erfinder: Metze, Hans-Jürgen, O-8921 Trebus (DE); Bartel, Manfred, O-8920 Niesky (DE); Wenke, Siegbert, O-7851 Reichwalde (DE); Lehmann, Andreas, O-8920 Niesky (DE); John, Michael, O-8920 Niesky (DE); Streich, Rüdiger, O-8920 Niesky (DE)
(74) Vertreter: Goetz, Rupert, Dipl.-Ing.

(57) **Zusammenfassung**

Der Übergang (2) weist ein Übergangsdach (3) und zwei Seitenwände (4) auf, von denen jede in ein Seitenwandunterteil (6) und ein Seitenwandoberteil (8) unterteilt ist. Die beiden Seitenwandunterteile (6) sind mit Seitenwandbereichen (7, 7') der beiden Güterwageneinheiten (1, 1') verbunden. Das Übergangsdach (3) ist an einem flexiblen Tragelement (10) abgestützt, das die höhenverstellbaren Dächer (9, 9') miteinander verbindet. Das Tragelement (10) ist vorzugsweise eine Blattfeder, die an den beiden höhenverstellbaren Dächern (9, 9') schwenkbar, und an mindestens einem von ihnen auch begrenzt längsverschiebbar geführt ist.

## Beschreibung

Güterwageneinheiten mit höhenverstellbaren Dächern sind vornehmlich für den Transport von Personenkraftwagen bekannt; sie sind meist zweistöckig mit einem festen oder höhenverstellbaren Zwischenboden ausgeführt und können entweder gemäß der DE-A 40 20 020 paarweise miteinander kurzgekuppelt oder gemäß der FR-A 1 503 791 über Puffer und normale Eisenbahnkupplungen miteinander verbunden sein. Die aus der DE-A 40 20 020 bekannten, paarweise miteinander kurzgekuppelten Güterwageneinheiten sind durch ein elastisches Element, beispielsweise einen Faltenbalg miteinander verbunden; ein wettergeschützter Übergang zwischen benachbarten Paaren solcher Güterwageneinheiten ist aber nicht vorgesehen. Bei Eisenwageneinheiten, die vornehmlich dem Personenverkehr dienen, sind wettergeschützte Übergänge, die meist ebenfalls Faltenbälge aufweisen, zwar üblich, doch sind solche Wageneinheiten mit festen Dächern ausgestattet. Gleiches gilt auch für Gelenkbusse, die gemäß der DE-A 28 54 416 und der DE-U 89 10 106 miteinander gelenkig gekuppelte und durch wettergeschützte Übergänge miteinander verbundene Einheiten aufweisen.

Der Erfindung liegt die Aufgabe zugrunde, einen flexiblen Übergang zwischen zwei Güterwageneinheiten mit höhenverstellbaren Dächern derart zu gestalten, daß er sich allen, auch voneinander abweichenden, Stellungen benachbarter Dächer ohne weiteres anpaßt und in jeder Stellung einen ausreichenden Wetterschutz bietet.

Diese Aufgabe ist erfindungsgemäß dadurch gelöst, daß
- der Übergang ein Übergangsdach und zwei Seitenwände aufweist,
- jede der beiden Seitenwände in ein Seitenwandunterteil und ein Seitenwandoberteil unterteilt ist,
- die beiden Seitenwandunterteile mit Seitenwandbereichen der beiden Güterwageneinheiten verbunden sind, und
- das Übergangsdach an mindestens einem flexiblen Tragelement abgestützt ist, das die höhenverstellbaren Dächer miteinander verbindet.

Die Unterteilung der Seitenwände des Übergangs in Unter- und Oberteile hat den Vorteil, daß die ständig mit Seitenwandbereichen der benachbarten Güterwageneinheiten verbunden bleibenden Seitenwandunterteile zur Stabilisierung des Übergangs beitragen, ohne daß diese Unterteile selber besonders kräftig bemessen zu sein brauchen. Das Übergangsdach ist nicht mit den vollständigen Seitenwänden des Überganges sondern nur mit den Seitenwandoberteilen verbunden und ist deshalb in besonders hohem Maß anpassungsfähig an unterschiedliche Höhenstellungen der Dächer der benachbarten Güterwageneinheiten. Die Unterteilung der Seitenwände des Übergangs in feste Unterteile und zusammen mit dem Übergangsdach höhenverstellbare Oberteile hat ferner den Vorteil, daß das Tragelement, das die höhenverstellbaren Dächer benachbarter Güterwageneinheiten miteinander verbindet, keine besonders große Last zu tragen hat und deshalb raumsparend gestaltet werden kann.

Das Tragelement ist vorzugsweise eine Blattfeder, die an den beiden höhenverstellbaren Dächern schwenkbar, und an mindestens einem von ihnen auch begrenzt längsverschiebbar, geführt ist. Die Blattfeder kann ein- oder mehrlagig sein; im allgemeinen genügt eine einlagige, und somit besonders raumsparende und leichte Ausführung der Blattfeder.

Das von einer Blattfeder gebildete Tragelement ist vorzugsweise an mindestens einem der einander benachbarten höhenverstellbaren Dächer in zwei hintereinander angeordneten Horizontalführungen geführt. Die Blattfeder ist in diesen Horizontalführungen wie ein eingespannter Träger gehalten, so daß sie bei gegebenen senkrechten Belastungen verhältnismäßig schlank gestaltet sein kann. Um jedoch allzu große Konzentrationen von Biegemomenten in der Blattfeder zu vermeiden, ist es ferner zweckmäßig, daß mindestens eine der Horizontalführungen mit dem zugehörigen Dach durch ein Federelement verbunden ist.

Die als Tragelement dienende Blattfeder muß in ihren Horizontalführungen möglichst leicht längsverschiebbar sein und muß darüber hinaus auch einen ausreichenden Spielraum für Querverschiebungen jedenfalls dann haben, wenn die Horizontalführungen nicht selber derart schwenkbar und querverschiebbar gelagert sind, daß sie sich an Winkelbewegungen anpassen können, die zwischen benachbarten Güterwageneinheiten bei Kurvenfahrt auftreten.

Um trotz der erforderlichen Verschiebbarkeit der Blattfeder zu verhindern, daß diese aus den Horizontalführungen herausrutscht, ist zweckmäßigerweise zwischen den zwei Horizontalführungen, die an einem der höhenverstellbaren Dächer angeordnet sind, ein Anschlag an der Blattfeder befestigt, der ihre Längsverschiebung gegenüber diesem Dach begrenzt.

Als Tragelement kann anstatt einer Blattfeder ein Seil vorgesehen sein, das die beiden benachbarten höhenverstellbaren Dächer miteinander verbindet und durch ein Federelement unter Vorspannung gehalten ist. Ein solches Tragelement ist aus der erwähnten DE-A 28 54 416 bekannt; es dient dort zur Abstützung eines Faltenbalges zwischen Wageneinheiten eines Gelenkbusses mit nicht höhenverstellbarem Dach.

Unabhängig von der Gestaltung des Tragelements ergibt sich ein besonders guter Wetterschutz, auch gegen seitlich einfallenden Schlagregen, wenn die Seitenwandoberteile die Seitenwandunterteile mindestens in abgesenktem Zustand der höhenverstellbaren Dächer überlappen. Das Maß der Überlappung kann so gewählt sein, daß die Seitenwände auch in der höchstmöglichen Stellung der höhenverstellbaren Dächer noch dicht sind oder nur einen Schlitz freigeben, der Tageslicht einfallen läßt aber immer noch ausreichenden Schutz gegen Schlagregen bietet.

Die Erfindung wird im folgenden anhand von Ausführungsbeispielen näher erläutert. In den Zeichnungen zeigen:
- Fig. 1: einen Längsschnitt durch benachbarte obere Dachbereiche zweier Güterwageneinheiten mit einem erfindungsgemäßen Übergang,
- Fig. 2: einen Längsschnitt wie Fig. 1 bei ungleicher Höheneinstellung der Dächer der beiden Güterwageneinheiten,
- Fig. 3: den waagerechten Schnitt III - III in Fig. 1,
- Fig. 4: einen Längsschnitt ähnlich Fig. 1 bei einer abgewandelten Ausführungsform der Erfindung und
- Fig. 5: einen Längsschnitt ähnlich Fig. 1 bei einer weiteren Ausführungsform der Erfindung.

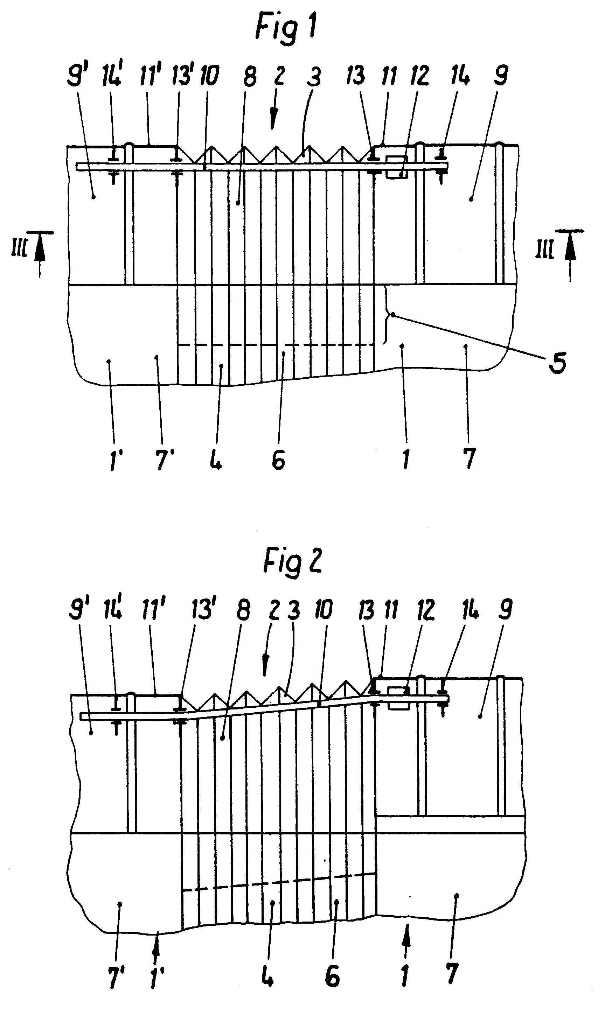

Gemäß Fig. 1 sind zwei Güterwageneinheiten 1 und 1' durch einen Übergang 2 miteinander verbunden, der ein Übergangsdach 3 und zwei senkrechte Seitenwände 4 aufweist. Das Übergangsdach 3 und die Seitenwände 4 sind vorzugsweise, wie dargestellt, von einem Faltenbalg gebildet, der in üblicher Weise aus Gummi oder gummiartigem Werkstoff mit Textilverstärkung gebildet sein kann. In entsprechender Weise können auch Wellenbälge verwendet werden. Es sind aber auch vereinfachte Ausführungsformen möglich, bei denen das Übergangsdach 3 und die Seitenwände 4 von Planen gebildet sind.

Die Seitenwände 4 sind in einer waagerechten Ebene geteilt, so daß jede von ihnen ein Seitenwandunterteil 6 und ein Seitenwandoberteil 8 aufweist. Die Seitenwandunterteile 6 sind fest mit Seitenwandbereichen 7 und 7' sowie mit Untergestellen der beiden Güterwageneinheiten 1 und 1' verbunden. Das Übergangsdach 3 ist fest mit je einem höhenverstellbaren Dach 9 bzw. 9' der beiden Güterwageneinheiten 1 und 1' verbunden. Die Seitenwandoberteile 8 sind am Übergangsdach 3 befestigt oder - vorzugsweise - einstückig mit ihm ausgebildet und somit ebenfalls fest mit den beiden benachbarten höhenverstellbaren Dächern 9 und 9' verbunden.

Wenn die beiden Dächer 9 und 9' abgesenkt sind, überlappen die Seitenwandoberteile 8 die Seitenwandunterteile 6 gemäß Fig. 1 um ein Maß 5. Wenn eines der Dächer 9, 9' ohne das andere nach oben verstellt wird oder diesem beim Verstellen voraneilt, paßt sich das Übergangsdach 3 samt Seitenwandoberteilen 8 dem Höhenunterschied zwischen den Dächern 9 und 9' ohne weiteres an; dabei stellen sich die unteren Ränder der Seitenwandoberteile 8 schräg, wie in Fig. 2 mit einer strichpunktierten Linie angedeutet ist. Die Seitenwandoberteile 8 nehmen dabei einen parallelogrammartige Form an. Wegen ihrer verhältnismäßig geringen Höhe, die vorzugsweise nicht mehr als halb so groß ist, wie die Gesamthöhe der senkrechten Wände 4, besteht nicht die Gefahr, daß die Seitenwandoberteile 8 sich zwischen den Seitenwandbereichen 7 und 7' so stauen oder gar verklemmen, daß die weitere Höhenverstellung der Dächer 9 und 9' dadurch behindert wäre.

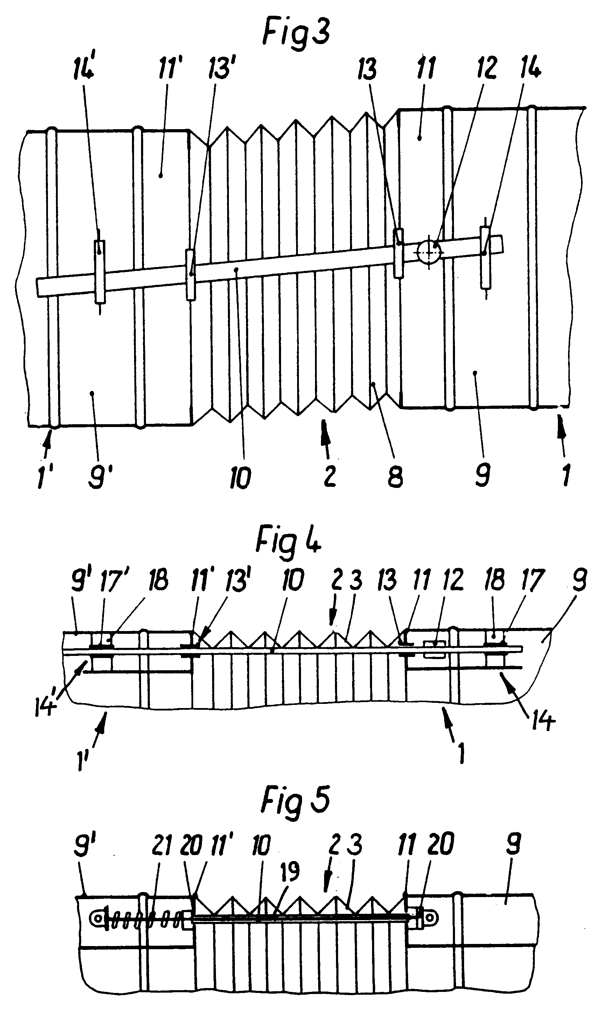

Das Übergangsdach 3 liegt auf einem Tragelement 10 auf, das einander benachbarte Dachenden 11 und 11' der Güterwageneinheiten 1 und 1' miteinander verbindet. Das Tragelement 10 ist bei der Ausführungsform gemäß Fig. 1 bis 3 und auch bei der in Fig. 4 dargestellten Variante eine Blattfeder, die an den beiden Dachenden 11 und 11' in je einem Paar hintereinander angeordneter Horizontalführungen 13 und 14 bzw. 13' und 14' längsverschiebbar sowie auch begrenzt querverschiebbar geführt ist. Die Längsverschiebbarkeit des Tragelements in bezug auf das Dachende 11 ist durch einen zwischen den beiden Horizontalführungen 13 und 14 am Tragelement 10 befestigten Anschlag 12 begrenzt. Dieser Anschlag 10 hat vorzugsweise, wie dargestellt, die Form eines um eine senkrechte Achse drehbaren Rades oder Radpaars, das sich bei Querverschiebungen an jeweils einer der Horizontalführungen 13 und 14 abwälzen kann, wodurch Reibungswiderstände gegen solche Verschiebungen weitgehend vermieden werden.

Gemäß Fig. 4 ist jede der Horizontalführungen 13 und 14 sowie 13' und 14' von einem Paar waagerechter Führungsplatten 17 gebildet, die durch je ein unmittelbar oder mittelbar am zugehörigen Dachende 11 bzw. 11' abgestütztes Federelement 18 gegen das von einer einzigen Blattfeder gebildete Tragelement 10 gedrückt werden. Die Kraft der Federelemente 18 ist so bemessen, daß das Tragelement 10 in den Horizontalführungen 13 und 14 sowie 13' und 14' nicht klappern kann, bei den vor allem bei Kurvenfahrt erforderlichen Längs- und Querverschiebungen aber nicht nennenswert durch Reibung behindert wird. Die Führungsplatten 17 sind vorzugsweise mit einem Werkstoff wie Polytetrafluorethylen beschichtet, der gegenüber dem Werkstoff des Tragelements 10, vorzugsweise Federstahl, nur einen geringen Reibungskoeffizienten hat.

Bei der in Fig. 5 dargestellten Ausführungsform ist das Tragelement 10 ein Seil, vorzugsweise aus Stahl, das unter dem Übergangsdach 3 in einem Schutzrohr 19 geführt ist, mit einem Ende mittels eines Widerlagers 20 am Dachende 9 angehängt, in einem Widerlager 20' am anderen Dachende 9' geführt und durch eine an diesem Widerlager 20' abgestützte Druckfeder 21 gespannt gehalten ist.

## Patentansprüche

1. Wettergeschützter flexibler Übergang (2) zwischen zwei Güterwageneinheiten (1, 1') mit höhenverstellbaren Dächern (9, 9'),
**dadurch gekennzeichnet**, daß
- der Übergang (2) ein Übergangsdach (3) und zwei Seitenwände (4) aufweist,
- jede der beiden Seitenwände (4) in ein Seitenwandunterteil (6) und ein Seitenwandoberteil (8) unterteilt ist,
- die beiden Seitenwandunterteile (6) mit Seitenwandbereichen (7, 7') der beiden Güterwageneinheiten (1, 1') verbunden sind, und
- das Übergangsdach (3) an mindestens einem flexiblen Tragelement (10) abgestützt ist, das die höhenverstellbaren Dächer (9, 9') miteinander verbindet.

2. Übergang nach Anspruch 1,
**dadurch gekennzeichnet**,
daß das Tragelement (10) eine Blattfeder ist, die an den beiden höhenverstellbaren Dächern (9, 9') schwenkbar, und an mindestens einem von ihnen auch begrenzt längsverschiebbar geführt ist.

3. Übergang nach Anspruch 2,
**dadurch gekennzeichnet,**
daß das Tragelement (10) an mindestens einem der höhenverstellbaren Dächer (9, 9') in zwei hintereinander angeordneten Horizontalführungen (13, 14; 13', 14') geführt ist.

4. Übergang nach Anspruch 3,
**dadurch gekennzeichnet,**
daß mindestens eine der Horizontalführungen (13, 14; 13', 14') mit dem zugehörigen höhenverstellbaren Dach (9, 9') durch ein Federelement (18, 18') verbunden ist.

5. Übergang nach Anspruch 3 oder 4,
**dadurch gekennzeichnet,**
daß am Tragelement (10) zwischen den zwei Horizontalführungen (13, 14), die an einem der höhenverstellbaren Dächer (9) angeordnet sind, ein Anschlag (12) befestigt ist, der die Längsverschiebung des Tragelements (10) gegenüber diesem Dach (9) begrenzt.

6. Übergang nach Anspruch 1,
**dadurch gekennzeichnet,**
daß das Tragelement (10) ein Seil ist, das die beiden höhenverstellbaren Dächer (9, 9') miteinander verbindet und durch ein Federelement (21) unter Vorspannung gehalten ist.

7. Übergang nach einem der Ansprüche 1 bis 6,
**dadurch gekennzeichnet,**
daß die Seitenwandoberteile (8) die Seitenwandunterteile (16) mindestens in abgesenktem Zustand der höhenverstellbaren Dächer (9, 9') überlappen.
